# EUROPEAN PATENT APPLICATION

(11) **EP 4 303 974 A1**
(43) Date of publication of application: **10.01.2024**
(21) Application number: 22763095.1
(22) Date of filing: 24.02.2022
(51) Int. Cl.: H01M 10/04, H01M 50/533, H01M 50/538

(54) **CYLINDRICAL BATTERY**

(30) Priority: 05.03.2021 JP 2021035421
(71) Applicant: Panasonic Energy Co., Ltd., Osaka 570-8511 (JP)
(72) Inventor: HARAGUCHI Shin, Kadoma-shi, Osaka 571-0057 (JP); OKUTANI Oose, Kadoma-shi, Osaka 571-0057 (JP); OKIMOTO Ryota, Kadoma-shi, Osaka 571-0057 (JP)
(74) Representative: Novagraaf International SA
(86) International application number: PCT/JP2022/007607
(87) International publication number: WO 2022/186039

(57) **Abstract**

This cylindrical battery (10) comprises: a bottomed tubular exterior can (16); an electrode body (14) which is housed in the exterior can (16) and around which a long positive electrode (11) and a long negative electrode (12) are wound with a separator (13) therebetween; a plurality of negative-electrode lead parts (21) extending from a long negative-electrode current collector of the negative electrode (12) toward the bottom part (68) of the exterior can (16); a first current-collector plate (40) that is disposed on the bottom part (68) side of the electrode body (14) and that has at least two through-holes (41) at the positions different from each other in the radial direction; and a second current-collector plate (45) disposed between the first current-collector plate (40) and the bottom part (68). The negative-electrode lead parts (21) each pass through any one of the through-holes (41). Leading-end portions of the plurality of negative-electrode lead parts (21) are sandwiched between the first current-collector plate (40) and the second current-collector plate (45), and are electrically connected to the second current-collector plate (45).

## Description

### TECHNICAL FIELD

The present disclosure generally relates to a cylindrical battery.

### BACKGROUND ART

As a conventional technique of a cylindrical battery, there has been known one disclosed in PATENT LITERATURE 1. In the cylindrical battery, a plurality of striplike positive electrode leads protrude from a positive electrode toward a sealing assembly. The plurality of positive electrode leads are electrically connected to a metal plate and a ring-shaped metal member by laser welding in a state of being held between the metal plate and the ring-shaped member. The metal plate is electrically connected to the sealing assembly, and the positive electrode is electrically connected to a sealing plate located at an end in a height direction of the sealing assembly. The sealing plate serves as a positive electrode terminal.

### CITATION LIST

### PATENT LITERATURE

PATENT LITERATURE 1: Japanese Unexamined Patent Application Publication No. 2001-118561

### SUMMARY

### TECHNICAL PROBLEM

In the above-described cylindrical battery, it is necessary to bend the plurality of positive electrode leads to the radially outer side toward the ring-shaped member, but the positive electrodes protruding from the radially inward side of an electrode assembly have a large radius of curvature when being bent. Accordingly, a large stress is likely to be applied on the positive electrode leads protruding from the radially inward side of the electrode assembly, which is likely to cause breakage of the positive electrode leads. The likelihood of the breakage of the positive electrode leads makes it difficult for the positive electrode leads to protrude from the end on the radially inward side of the electrode assembly, which limits a radial range of the electrode assembly from which the positive electrode leads are drawn.

Thus, it is an advantage of the present disclosure to provide a cylindrical battery that makes it possible to increase the degree of freedom of arrangement of a plurality of lead parts and is unlikely to cause breakage of the plurality of lead parts.

### SOLUTION TO PROBLEM

In order to solve the above-described problem, a cylindrical battery according to the present disclosure comprises a bottomed cylindrical exterior housing can, an electrode assembly that is housed in the exterior housing can, and in which an elongated first electrode and an elongated second electrode having different polarities from each other are wound with a separator interposed between the first electrode and the second electrode, a plurality of second electrode lead parts that extend from the second electrode toward a bottom of the exterior housing can, a first current collector plate that is disposed on a side of the bottom of the exterior housing can of the electrode assembly and has two or more through holes at different positions from each other in a radial direction, and a second current collector plate that is disposed between the first current collector plate and the bottom, wherein each second electrode lead part passes through any one of the through holes, and a tip portion of each of the plurality of second electrode lead parts is held between the first current collector plate and the second current collector plate and is electrically connected to the second current collector plate.

### ADVANTAGEOUS EFFECTS OF INVENTION

The cylindrical battery according to the present disclosure makes it possible to increase the degree of freedom of arrangement of the plurality of lead parts and is unlikely to cause breakage of the plurality of lead parts.

### BRIEF DESCRIPTION OF DRAWINGS

FIG. 1 is an axial sectional view of a cylindrical battery according to an embodiment of the present disclosure.
FIG. 2 is a perspective view of an electrode assembly.
FIG. 3 is a schematic plan view of a negative electrode as viewed in its thickness direction and for illustrating a structure of a negative electrode lead part.
FIG. 4 is a perspective view of an electrode assembly with which a first current collector plate is integrated.
FIG. 5 is a perspective view of the electrode assembly with which a second current collector plate is integrated.
FIG. 6 is a perspective view illustrating a state in which laser welding is performed on the second current collector plate and a bottom of an exterior housing can.
FIG. 7 is a schematic plan view corresponding to FIG. 3 in a negative electrode of the modified example.

### DESCRIPTION OF EMBODIMENTS

Hereinafter, an embodiment of a cylindrical battery according to the present disclosure will be described in detail with reference to the drawings. The cylindrical battery of the present disclosure may be a primary battery, or may be a secondary battery. Additionally, the cylindrical battery may be a battery using an aqueous electrolyte, or may be a battery using a non-aqueous electrolyte. In the following, a non-aqueous electrolyte secondary battery (lithium ion battery) using a non-aqueous electrolyte will be exemplified as a cylindrical battery 10 of an embodiment, but the cylindrical battery of the present disclosure is not limited to this.

In a case where a plurality of embodiments and modified examples and the like are included in the following description, it is assumed from the beginning that a new embodiment is constructed by appropriately combining those feature portions. In the following embodiments, the same components are denoted by the same reference numerals in the drawings, and duplicate descriptions are omitted. Schematic diagrams are included in a plurality of the drawings, and the dimensional ratios such as lengths, widths and heights of each member between different drawings are not necessarily the same. In this specification, a sealing assembly 17 side in an axial direction (height direction) of a battery case 15 is defined as "upper", and a bottom side of an exterior housing can 16 in the axial direction is defined as "lower". Of the components described below, components that are not described in the independent claim indicating the highest level concept are arbitrary components, and are not essential components.

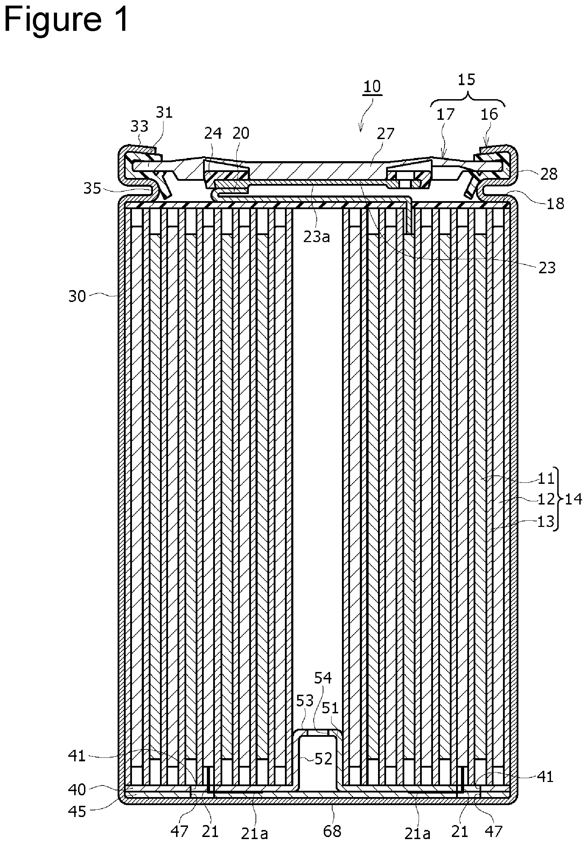

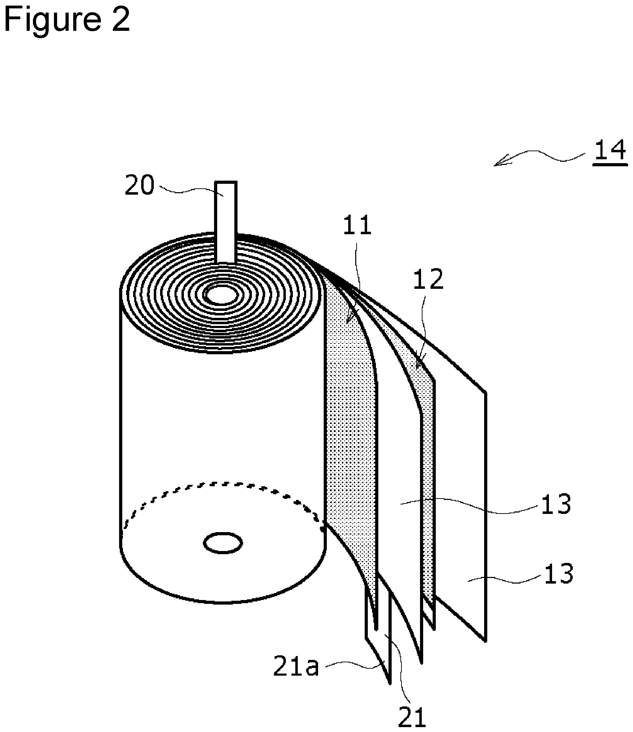

FIG. 1 is an axial sectional view of the cylindrical battery 10 according to an embodiment of the present disclosure, and FIG. 2 is a perspective view of an electrode assembly 14. As illustrated in FIG. 1, the cylindrical battery 10 comprises the woundtype electrode assembly 14, a non-aqueous electrolyte (not illustrated), and the battery case 15 that houses the electrode assembly 14 and the non-aqueous electrolyte. The electrode assembly 14 includes a positive electrode 11 serving as an example of a first electrode, a negative electrode 12 serving as an example a second electrode, and a separator 13 interposed between the positive electrode 11 and the negative electrode 12. The electrode assembly 14 has a wound structure in which the positive electrode 11 and the negative electrode 12 are wound with the separator 13 interposed therebetween. The battery case 15 includes the bottomed cylindrical exterior housing can 16 and the sealing assembly 17 that caps an opening of the exterior housing can 16. The cylindrical battery 10 comprises a resin gasket 28 disposed between the exterior housing can 16 and the sealing assembly 17.

The non-aqueous electrolyte includes a non-aqueous solvent, and an electrolyte salt dissolved in the non-aqueous solvent. Examples of the non-aqueous solvent may include esters, ethers, nitriles, amides, and mixed solvents containing two or more selected from the foregoing. The non-aqueous solvent may contain a halogen-substituted product obtained by substituting at least some of hydrogen atoms in these solvents with a halogen atom such as fluorine. Note that the non-aqueous electrolyte is not limited to a liquid electrolyte and may be a solid electrolyte that uses a gel polymer or the like. As the electrolyte salt, a lithium salt such as LiPF₆ is used.

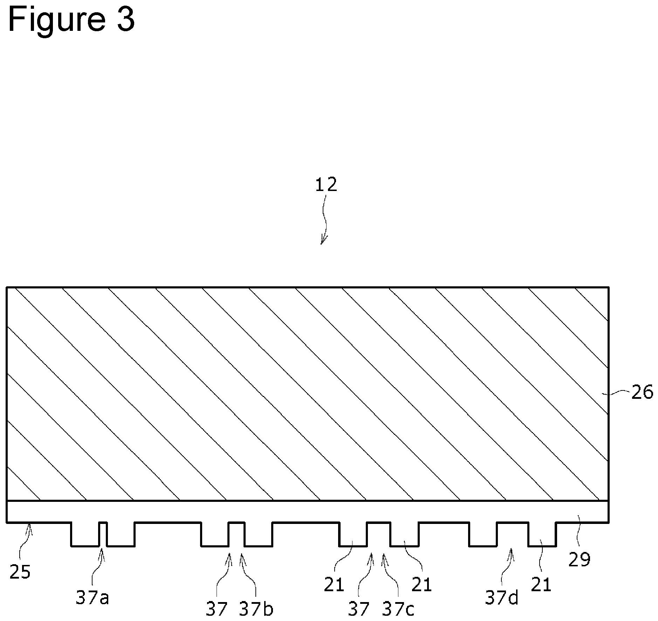

As illustrated in FIG. 2, the electrode assembly 14 has the elongated positive electrode 11, the elongated negative electrode 12, and the two elongated separators 13. A positive electrode lead 20 is bonded to the positive electrode 11, and a plurality of negative electrode lead parts 21 (only one is illustrated in FIG. 2) are electrically connected to the negative electrode 12. The negative electrode lead part 21 forms a second electrode lead part. A structure of the plurality of negative electrode lead parts 21 will be described in detail later using FIG. 3. The negative electrode 12 is formed to be one size larger than the positive electrode 11 in order to suppress precipitation of lithium, and is formed to be longer in the longitudinal direction and the width direction (short direction) than the positive electrode 11. The two separators 13 are each formed to be at least one size larger than the positive electrode 11, and are disposed so as to interpose, for example, the positive electrode 11 therebetween.

The positive electrode 11 has a positive electrode current collector and a positive electrode mixture layer formed on each surface of the positive electrode current collector. Examples of the positive electrode current collector may include a foil of metal such as aluminum or an aluminum alloy, which is stable within a potential range of the positive electrode 11, and a film in which such a metal is disposed on a surface layer thereof. The positive electrode mixture layer includes a positive electrode active material, a conductive agent, and a binder. The positive electrode 11 can be produced by, for example, applying a positive electrode mixture slurry including a positive electrode active material, a conductive agent, a binder, and the like on a positive electrode current collector, drying the resulting coating film, and then compressing the coating film to form a positive electrode mixture layer on each surface of the current collector.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferable lithium-containing metal composite oxide is a composite oxide containing at least one of Ni, Co, Mn and Al.

Examples of the conductive agent included in the positive electrode mixture layer may include carbon materials such as carbon black, acetylene black, Ketjen black, and graphite. Examples of the binder included in the positive electrode mixture layer may include fluorocarbon resins such as polytetrafluoroethylene (PTFE) and polyvinylidene fluoride (PVdF), polyacrylonitrile (PAN), polyimide resins, acrylic resins, and polyolefin resins. These resins may be used in combination with cellulose derivatives such as carboxymethyl cellulose (CMC) or a salt thereof, a polyethylene oxide (PEO), or the like.

The negative electrode 12 has a negative electrode current collector and a negative electrode mixture layer formed on each surface of the negative electrode current collector. Examples of the negative electrode current collector may include a foil of a metal such as copper or a copper alloy, which is stable within a potential range of the negative electrode 12, and a film in which such a metal is disposed on a surface layer thereof. The negative electrode mixture layer includes a negative electrode active material, and a binder. The negative electrode 12 can be produced by, for example, applying a negative electrode mixture slurry including a negative electrode active material, a binder, and the like on a negative electrode current collector, drying the resulting coating film, and then compressing the coating film to form a negative electrode mixture layer on each surface of the current collector.

As the negative electrode active material, a carbon material that reversibly occludes and releases lithium ions is generally used. A preferable carbon material is graphite including natural graphite such as flaky graphite, massive graphite, and earthy graphite, and artificial graphite such as massive artificial graphite and graphitized mesophase carbon microbeads. As the negative electrode active material, a silicon (Si) material containing Si may be included in the negative electrode mixture layer. As the negative electrode active material, a metal alloyed with lithium other than Si, an alloy containing such a metal, a compound containing such a metal, and the like may be used.

As the binder included in the negative electrode mixture layer, fluorocarbon resins, PAN, polyimide resins, acrylic resins, polyolefin resins, and the like may be used as in the case of the positive electrode 11, and a styrene-butadiene rubber (SBR) or a modification thereof is preferably used. In the negative electrode mixture layer, for example, in addition to SBR and the like, CMC or a salt thereof, polyacrylic acid (PAA) or a salt thereof, polyvinyl alcohol, or the like may be included.

A porous sheet having ion permeability and an insulation property is used as the separator 13. Specific examples of the porous sheet include a microporous thin film, a woven fabric, and a nonwoven fabric. The material of the separator 13 is preferably a polyolefin resin such as polyethylene or polypropylene, or a cellulose. The separator 13 may be either a single layer structure or a laminated structure. A heat-resistant layer or the like may be formed on a surface of the separator 13. Note that the negative electrode 12 may include a winding start end of the electrode assembly 14, but the separator 13 generally extends beyond a winding start side end of the negative electrode 12, and a winding start side end of the separator 13 serves as the winding start end of the electrode assembly 14.

As illustrated in FIG. 1, the cylindrical battery 10 further comprises an insulating plate 18 disposed on the upper side of the electrode assembly 14. The positive electrode lead 20 attached to the positive electrode 11 extends toward the sealing assembly 17 through a through hole of the insulating plate 18. The positive electrode lead 20 is connected to a lower surface of a terminal plate 23, which is a bottom plate of the sealing assembly 17, by means of welding or the like, and a sealing plate 27, which is a top plate of the sealing assembly 17 electrically connected to the terminal plate 23, serves as a positive electrode terminal.

The cylindrical battery 10 comprises a first current collector plate 40 disposed on the lower side of the electrode assembly 14 and a second current collector plate 45 disposed below the first current collector plate 40. The first current collector plate 40 has a plurality of through holes 41. Each negative electrode lead part 21 is bent to a radial inner side or a radially outer side after passing through any one of the through holes 41. As will be described in detail later, the plurality of through holes 41 are located at different positions in the radial direction. The negative electrode lead parts 21 extending from the radially inner side of the electrode assembly 14 are bent to the radially outer side after passing through the through holes 41 located on the radially inner side, and the negative electrode lead parts 21 extending from the radially outer side of the electrode assembly 14 are bent to the radially inner side after passing through the through holes 41 located on the radially outer side.

The tip portions 21a of the plurality of negative electrode lead parts 21 are held between the first current collector plate 40 and the second current collector plate 45. The tip portions 21a of the plurality of negative electrode lead parts 21 are bonded at least to the second current collector plate 45 located on the lower side. At this time, the tip portions 21a of all the negative electrode lead parts 21 are not necessarily required to be bonded to the second current collector plate 45. It is sufficient to bond the tip portion 21a of at least one negative electrode lead part 21 to the second current collector plate 45, and this makes it possible to electrically connect the tip portions 21a of all the negative electrode lead parts 21 to the second current collector plate 45 by bonding the tip portions 21 of the negative electrode lead parts 21 to one another. The plurality of negative electrode lead parts 21 are preferably bonded to the first current collector plate 40 located on the upper side. The first current collector plate 40 has a fitting part 51 that protrudes toward the upper side in the axial direction to be fitted into a hollow of the electrode assembly 14. The fitting part 51 includes a cylindrical part 52 that is fitted into the hollow of the electrode assembly 14, and a disk part 53 that is connected to the upper end of the cylindrical part 52 and with which an upper opening of the cylindrical part 52 is capped. A through hole 54 that passes through the disk part 53 in the axial direction is provided in a center in the radial direction of the disk part 53. The exterior housing can 16 is a metal container having a bottomed cylindrical portion. The second current collector plate 45 is bonded to a bottom 68 of the exterior housing can 16.

A portion between the exterior housing can 16 and the sealing assembly 17 is sealed with the annular gasket 28, and an internal space of the battery case 15 is closed. The gasket 28 is held between the exterior housing can 16 and the sealing assembly 17, and insulates the sealing assembly 17 from the exterior housing can 16. That is, the gasket 28 has a role of a seal material for maintaining the airtightness of the inside of the battery, and a role as an insulating material for insulating the sealing assembly 17 from the exterior housing can 16.

The exterior housing can 16 has an annular grooved portion 35 in one part in the height direction of a cylindrical outer circumferential surface of the exterior housing can 16. The grooved portion 35 can be formed by, for example, recessing the one part of the cylindrical outer circumferential surface toward the radially inward side by a radially inward spinning process. The exterior housing can 16 has a bottomed cylindrical portion 30 including the grooved portion 35 and an annular shoulder 33. The bottomed cylindrical portion 30 houses the electrode assembly 14 and the non-aqueous electrolyte, and the shoulder 33 is bent to the radially inward side from an end of the bottomed cylindrical portion 30 on the opening side to extend radially inward. The shoulder 33 is formed when an upper end of the exterior housing can 16 is bent to the inner side to be caulked to a circumferential edge 31 of the sealing assembly 17. The sealing assembly 17 is fixed by caulking to the exterior housing can 16 with the gasket 28 interposed between the shoulder 33 and the grooved portion 35.

### [Cylindrical Battery of Example]

Next, an example of a method of producing the above-described cylindrical battery 10 will be specifically described.

### <Production of Positive Electrode>

As the positive electrode active material, LiNi_{0.8}CO_{0.15}Al_{0.05}O₂ was used. The positive electrode active material of 100 parts by mass, polyvinylidene fluoride of 1.7 parts by mass as the binder, and acetylene black of 2.5 parts by mass as the conductive agent were mixed into a liquid component to prepare a positive electrode mixture paste. The obtained positive electrode mixture paste was applied to each surface of the positive electrode current collector constituted by an aluminum foil excluding the positive electrode lead connection portion and dried, and then the positive electrode mixture paste was rolled to have a predetermined thickness to obtain the positive electrode. The obtained positive electrode was cut to a predetermined size and the positive electrode lead made of Aluminum was connected to an exposed portion of the current collector with ultrasonic welding.

### <Production of Negative Electrode>

As the negative electrode active material, the easily graphitizable carbon was used. A negative electrode paste was obtained by stirring the negative electrode active material of 100 parts by mass, polyvinylidene fluoride of 0.6 parts by mass as the binder, carboxymethyl cellulose of 1 part by mass as the thickener, and an appropriate amount of water by using a twin-arm kneader. The obtained negative electrode mixture paste was applied to each surface of the elongated negative electrode current collector constituted by a copper foil. A non-applied portion to which the negative electrode paste was not applied was provided in a predetermined region in the width direction in each side of the elongated negative electrode current collector when the negative electrode mixture paste was applied to each surface of the negative electrode current collector. Subsequently, each surface of the negative electrode current collector was dried, and then rolled to have a predetermined thickness to obtain the negative electrode. Then, the obtained negative electrode was cut to a predetermined size to form a non-applied portion on one side in the width direction of the negative electrode. Thereafter, the non-applied portion constituted by a copper foil was subjected to a press-punching process to form the plurality of negative electrode lead parts 21 constituted by one part of the non-applied portion.

FIG. 3 is a schematic plan view of the produced negative electrode 12 when viewed from a thickness direction thereof, and is a schematic plan view for illustrating a structure of the negative electrode lead parts 21. Note that in FIG. 3, an end on the left side of the drawing sheet is defined as a winding start end. As illustrated in FIG. 3, the negative electrode 12 comprises the negative electrode current collector 25 and the negative electrode mixture layer 26 provided on each side of the negative electrode current collector 25. A negative electrode current collector 25 is constituted by, for example, a copper foil. A non-applied portion 29 to which the negative electrode current collector 25 is exposed is provided on one side in the width direction of each surface of the negative electrode 12. A part of the non-applied portion 29 protrudes in the width direction of the negative electrode 12, so that a plurality of negative electrode lead parts 21 are formed. That is, the plurality of negative electrode lead parts 21 are formed by a metal foil (copper foil in the present embodiment) constituting the negative electrode current collector 25. The plurality of negative electrode lead parts 21 are formed integrally with the negative electrode current collector 25 by the above-described press-punching process.

The plurality of negative electrode lead parts 21 are disposed to be spaced from each other in the longitudinal direction of the negative electrode 12. In the present embodiment, the plurality of negative electrode lead parts 21 are constituted by four sets of negative electrode lead pairs 37, and each set of negative electrode lead pair 37 is constituted by two negative electrode lead parts 21 disposed to be spaced in the longitudinal direction of the negative electrode 12. An interval in the longitudinal direction between the two negative electrode lead parts 21 constituting each negative electrode lead pair 37 increases toward a winding finish side. As describer later, the two negative electrode lead parts 21 constituting each negative electrode lead pair 37 pass through the same through hole 41 in the first current collector plate 40. Lengths of the plurality of negative electrode lead parts 21 are substantially the same.

### <Preparation of Non-Aqueous Electrolytic Solution>

In the mixed solvent of ethylene carbonate (EC), diethyl carbonate (DEC) and ethylmethyl carbonate (EMC), lithium hexafluorophosphate (LiPF₆) as an electrolyte was dissolved to 1.0 mol/L, thereby preparing a non-aqueous electrolytic solution.

### <Preparation of Sealing Assembly>

A thinner portion 23a (see FIG. 1) was provided at a center of the metal terminal plate 23 having a circular shape in a plan view, and then the terminal plate 23, an annular insulating plate 24 (see FIG. 1), and the sealing plate 27 were integrated together, thereby producing the sealing assembly 17. The thinner portion 23a was bonded to the center of the lower surface of the sealing plate 27 by welding.

### <Production of Battery>

The positive electrode 11 and the negative electrode 12 were spirally wound with the separator 13 made of a polyolefin resin interposed therebetween, thereby producing the electrode assembly 14. Thereafter, the electrode assembly 14, the first current collector plate 40, and the second current collector plate 45 were integrated together. Each of the first current collector plate 40 and the second current collector plate 45 was formed of a nickel (Ni) plate having a structure described below.

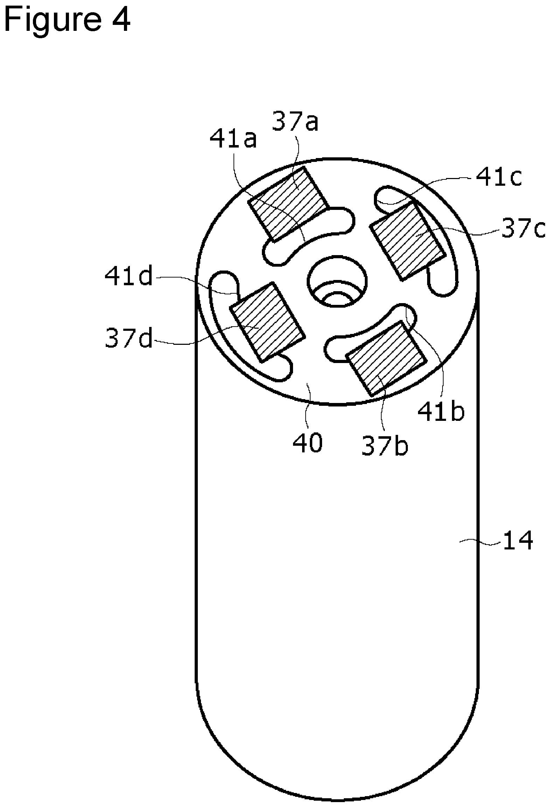

First to fourth through holes 41a, 41b, 41c, and 41d (see FIG. 4) were provided at different positions in the radial direction in the first current collector plate 40. The first through hole 41a was located radially inward than the second through hole 41b, the second through hole 41b was located radially inward than the third through hole 41c, and the third through hole 41c was located radially inward than the fourth through hole 41d. The first to fourth through holes 41a, 41b, 41c, and 41d were disposed to be spaced from one another in the circumferential direction. The above-described fitting part 51 (see FIG. 1) was provided on the first current collector plate 40, while a disk-shaped member was used for the second current collector plate 45. The second current collector plate 45 is different from the first current collector plate 40 only in that there is no fitting part 51 protruding toward the electrode assembly 14. Note that in the present embodiment, the second current collector plate 45 has through holes 47 (see FIG. 1), but the second current collector plate need not have through holes.

The electrode assembly 14, the first current collector plate 40, and the second current collector plate 45 were integrated together as follows. First, as illustrated in FIGS. 1, 3, and 4, the fitting part 51 (see FIG. 1) of the first current collector plate 40 was fitted into the hollow of the electrode assembly 14, and at the same time, the negative electrode lead parts 21 were allowed to pass through the through holes 41 in the first current collector plate. More specific description is as follows. A first negative electrode lead pair 37a (see FIGS. 3 and 4) located closest to the winding start side was allowed to pass through the first through hole 41a (see FIG. 4) in the first current collector plate 40. A second negative electrode lead pair 37b located second closest to the winding start side was allowed to pass through the second through hole 41b in the first current collector plate 40. A third negative electrode lead pair 37c located third closest to the winding start side was allowed to pass through the third through hole 41c in the first current collector plate 40. A fourth negative electrode lead pair 37d located on the outermost side in the radial direction was allowed to pass through the fourth through hole 41d in the first current collector plate 40.

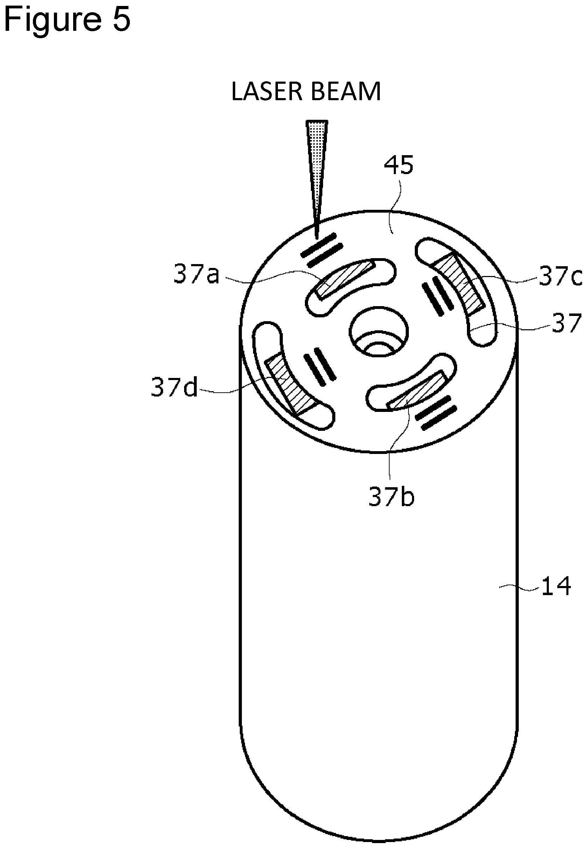

Subsequently, as illustrated in FIG. 4, portions protruding from the first and second through holes 41a and 41b in the first negative electrode lead pair 37a and the second negative electrode lead pair 37b were bent to the radially outer side, and portions protruding from the third and fourth through holes 41c and 41d in the third negative electrode lead pair 37c and the fourth negative electrode lead pair 37d were bent to the radially inner side. In this way, all the negative electrode lead parts 21 were bent on the first current collector plate 40. Thereafter, as illustrated in FIG. 5, after the second current collector plate 45 was disposed on the bent negative electrode lead parts 21, a laser beam was emitted to the second current collector plate 45 from the outer side in the axial direction of the second current collector plate 45. In this way, the laser welding was performed to bond the negative lead parts 21 formed by a copper foil to the second current collector plate 45 to integrate the electrode assembly 14, the first current collector plate 40, and the second current collector plate 45 together.

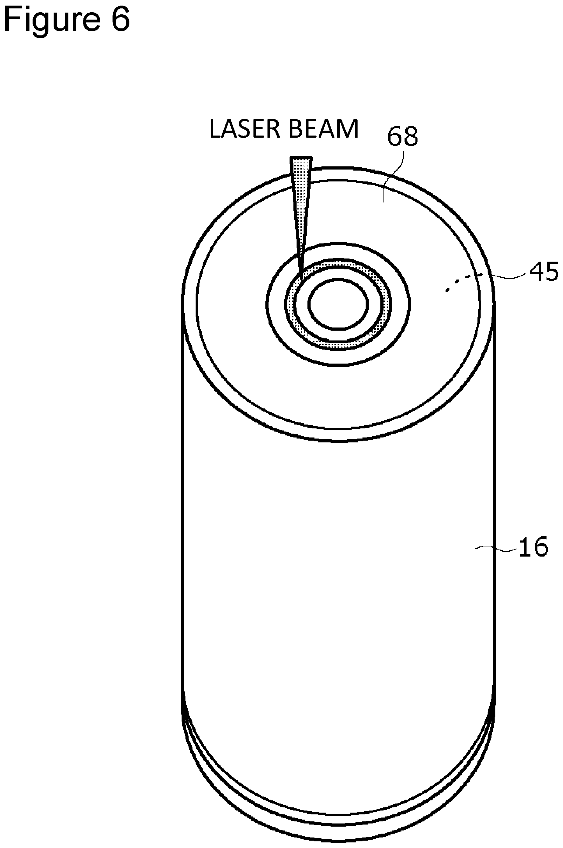

Note that a region shown in solid black in FIGS. 5 and 6 is an irradiation region of a laser beam. The wavelength and intensity of the laser beam used for laser welding can be appropriately changed on the basis of the thickness or the like of the second current collector plate 45. Note that the laser welding can be performed to bond the negative lead parts 21 to the negative current collector plate 45, while bonding the negative lead parts 21 to the first current collector plate 40.

Next, as illustrated in FIG. 6, the electrode assembly 14 integrated with the first and second current collector plates 40 and 45 was inserted into the exterior housing can 16, and the laser beam was emitted from the bottom 68 side of the exterior housing can 16 to perform laser welding to bond the bottom 68 and the second current collector plate 45 to each other. As illustrated in FIG. 6, the laser beam is emitted preferably to the entire range in the circumferential direction because the bonding between the bottom 68 and the second current collector plate 45 can be reliably performed. For example, as illustrated in FIG. 6, the laser beam is emitted to a toric region which becomes concentric with respect to the bottom 68 in a circular shape in a plan view as viewed from the axial direction.
The region to which the laser beam is emitted may be any region facing the second current collector plate 45 in the bottom 68, and can be set as an irradiation region of the laser beam. The wavelength and intensity of the laser beam used for laser welding can be appropriately changed on the basis of the thickness or the like of the bottom 68. Thereafter, the positive electrode lead 20 connected to the positive electrode 11 was bonded to the sealing assembly 17 by welding. Subsequently, after the electrolytic solution was injected into the exterior housing can 16, the sealing assembly 17 was inserted into the exterior housing can 16, and a side wall of the exterior housing can 16 was caulked to the sealing assembly 17, thereby producing the cylindrical battery 10.

### [Essential Configuration of Cylindrical Battery of the Present Disclosure and Operational Effects Thereof]

As described above, the cylindrical battery 10 of the present disclosure comprises the bottomed cylindrical exterior housing can 16, the electrode assembly 14 that is housed in the exterior housing can 16 and in which the elongated positive electrode 11 (first electrode) and the elongated negative electrode 12 (second electrode) are wound with the separator 13 interposed between the positive electrode 11 and the negative electrode 12, and the plurality of negative electrode lead parts 21 (second electrode lead parts) that extend from the elongated negative electrode current collector 25 of the negative electrode 12 toward the bottom 68 of the exterior housing can 16. The cylindrical battery 10 comprises the first current collector plate 40 that is disposed on the bottom 68 side of the electrode assembly 14 and has two or more through holes 41a, 41b, 41c, and 41d located at different positions in the radial direction, and the second current collector plate 45 that is disposed between the first current collector plate 40 and the bottom 68. Each negative electrode lead part 21 passes through any one of the through holes 41. The tip portions of the plurality of negative electrode lead parts 21 are held between the first current collector plate 40 and the second current collector plate 45, and are electrically connected to the second current collector plate 45.

Accordingly, the through holes allowing the negative electrode lead parts 21 to pass through can be provided at any positions in the first current collector plate 40, which makes it possible to freely draw the negative electrode lead parts 21 from any positions in the longitudinal direction of the negative electrode 12, and, for example, also makes it possible to draw the negative electrode lead parts 21 from an end on the winding start side in the longitudinal direction of the negative electrode 12. Accordingly, the plurality of negative electrode lead parts 21 can be evenly and wholly dispersed with respect to the longitudinal direction of the negative electrode 12, which makes it easy to reduce the internal resistance of the cylindrical battery 10.

In the first current collector plate 40, the through holes 41 allowing the negative electrode lead parts 21 to pass through are provided at appropriate positions, which makes it possible to allow the negative electrode lead parts 21 to pass through the through holes 41 and bend them to the first current collector plate 40 in a state in which the stress is not applied to the negative electrode lead parts 21, and to suppress the damage to the negative electrode lead parts 21. The position of the tip portion of each negative electrode lead part 21 with respect to the radial direction of the second current collector plate can be easily adjusted, which makes it possible to reliably and easily bond each negative electrode lead part 21 and the second current collector plate 45 to each other by laser welding or the like. The above-described adjustment can be performed also in the case where the lengths of the negative electrode lead parts 21 are set to be uniform as illustrated in FIG. 3, which facilitates the processing of the negative electrode 12.

The plurality of negative electrode lead parts 21 and the second current collector plate 45 can be bonded to each other in a state in which the plurality of negative electrode lead parts 21 are restrained by the first current collector plate 40 and the second current collector plate 45, whereby the bonding can be reliably performed. When the laser welding is used for the bonding, the first current collector plate 40 can be used as a receiver of the laser welding. That is, when the negative electrode lead parts 21 and the second current collector plate 45 are bonded to each other by emitting the laser beam from the lower side (side opposite to the first current collector plate 40 side in the axial direction) of the second current collector plate 45, a spatter occurs, but the spatter can be received by the first current collector plate 40, which makes it possible to prevent the spatter from entering the electrode assembly 14. Therefore, the cylindrical battery 10 with high quality can be produced.

### [Cylindrical Battery Configuration Preferable for Adoption and Operational Effects Thereof]

The plurality of negative electrode lead parts 21 are preferably formed by a metal foil constituting the negative electrode current collector 25.

The above-described configuration makes it possible to facilitate bending of the negative electrode lead parts 21, whereby the bending processing can be easily performed. The thicknesses of the negative electrode lead parts 21 can be reduced, which makes it easy to increase the winding number of the electrode assembly 14 and increase the capacity of the cylindrical battery 10. The negative electrode lead parts 21 can be produced readily at low cost.

The plurality of negative electrode lead parts 21 are preferably bonded to the first current collector plate 40.

The above-described configuration makes it possible to electrically connect the plurality of negative electrode lead parts 21 to the second current collector plate 45 more reliably. The first current collector plate 40 can be fixed inside the exterior housing can 16.

The first current collector plate 40 preferably has the fitting part 51 that is fitted into the hollow of the electrode assembly 14.

The above-described configuration makes it possible to perform radial positioning of the first current collector plate 40 with respect to the electrode assembly 14 with high accuracy, and perform positioning of the through holes 41 with respect to the electrode assembly 14 with high accuracy. Accordingly, the negative electrode lead parts 21 can be allowed to pass through the through holes 41 easily.

The electrode assembly 14 receives a radially outward force from the fitting part 51, which makes it possible to prevent the electrode assembly 14 from expanding toward the hollow during charging and discharging of the cylindrical battery 10. This makes it possible to suppress the deformation of the positive electrode 11 and the negative electrode 12 and suppress capacity deterioration of the cylindrical battery.

As illustrated in FIG. 1, the fitting part 51 has the through hole 54 extending in the axial direction. The through hole 54 is provided so that high-temperature gas generated when the cylindrical battery 10 generates heat abnormally is allowed to pass through the hollow of the electrode assembly 14 to flow toward the sealing assembly 17. The fitting part may have any structure that enables the fitting part to be fitted into the hollow of the electrode assembly 14 and allows the high-temperature gas to flow through the hollow of the electrode assembly. For example, the fitting part may have a cylindrical shape. Alternatively, the fitting part may have a tapered cylindrical shape having a conical outer circumferential surface tapered toward the upper side in the axial direction.
When the fitting part has a cylindrical shape tapered toward the upper side, the electrode assembly 14 can be prevented from being damaged due to contact with the fitting part when the fitting part is fitted into the hollow.

### [Modified Examples]

The present disclosure is not limited to the above embodiment and modified examples thereof, and various improvements and changes are possible within the matters described in the claims of the present application and the scope of equivalence of claims. In the above embodiment, there has been described a structure in which as illustrated in FIGS. 3 and 4, the through holes 41a, 41b, 41c, and 41d are provided in the four circumferential regions that do not overlap with one another in the cylindrical battery 10 and two negative electrode lead parts 21 are drawn from each of the through hole 41a, 41b, 41c, and 41d. The number of through holes and the number of negative electrode lead parts passing through each through hole may be changed arbitrarily.

There has been described a case where all the through holes 41a, 41b, 41c, and 41d in the first current collector plate 40 are provided at different positions in the radial direction. However, the plurality of through holes in the first current collector plate may include two or more through holes provided at the same position in the radial direction. In a case where the two through holes do not substantially overlap with each other even when being moved in the circumferential direction, it is determined that the two through holes are provided at different positions from each other in the radial direction. The plurality of through holes in the first current collector plate may include two or more through holes provided at respective positions that partially overlap with one another at least in the circumferential direction and do not overlap with one another in the radial direction.

In the example, the plurality of negative electrode lead parts 21 were integrally formed with the negative electrode current collector 25 by subjecting the metal foil to the press punching process. However, the plurality of negative electrode parts may be formed by cutting out the metal foil using the laser beam.

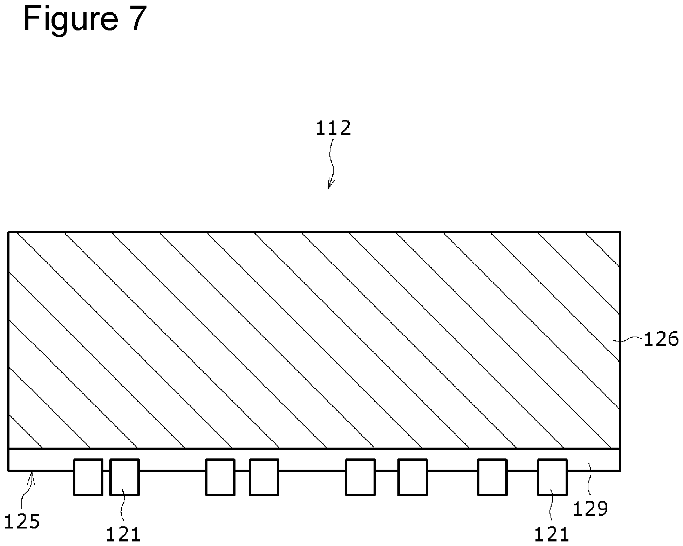

Alternatively, as illustrated in FIG. 7, i.e., a schematic plan view corresponding to FIG. 3 in a negative electrode 112 of the modified example, a plurality of negative electrode lead parts 121 may be formed by bonding a plurality of lead plates made of metal (e.g., copper) to a non-applied portion 129 adjacent in the width direction to a negative electrode mixture layer 126 in a negative electrode current collector 125. According to the modified example, the thickness of the negative electrode lead part 121 can be adjusted and the strength of the negative electrode lead part 121 can be adjusted.

In the electrode assembly 14, the length in the axial direction of the separator 13 is longer than the length in the axial direction of the positive electrode 11 and the length in the axial direction of the negative electrode 12. Accordingly, even when the first current collector plate 40 is disposed on the lower side of the electrode assembly 14, the separator 13 prevents a short circuit between the positive electrode 11 and the negative electrode 12 via the first current collector plate 40. However, an insulating layer may be disposed between the electrode assembly 14 and the first current collector plate 40.

The second current collector plate 45 and the plurality of negative electrode lead parts 21 are bonded by laser welding, but alternatively, the second current collector plate and the plurality of negative electrode lead parts may be bonded by resistance welding or ultrasonic welding. Furthermore, the bottom 68 of the exterior housing can 16 and the second current collector plate 45 are bonded by laser welding, but alternatively, the bottom of the exterior housing can and the second current collector plate may be also bonded by resistance welding or ultrasonic welding. There has been described in a case where the first current collector plate 40 has the fitting part 51 that is fitted into the hollow of the electrode assembly 14, but the first current collector plate need not have the fitting part that is fitted into the hollow of the electrode assembly.

There has been described in a case where the first current collector plate 40 is bonded to the second current collector plate 45 and the plurality of negative electrode lead parts 21, but the first current collector plate need not be bonded to both of the plurality of negative electrode lead parts 21 and the second current collector plate 45. As a material of the first and second current collector plates 40 and 45, nickel is used, but, alternatively, as a material of the first current collector plate and the second current collector plate, a material plated with nickel on cast iron, copper, or iron, may be used, for example.

As an embodiment of the present disclosure, there has been described a case where the second electrode electrically connected to the exterior housing can 16 is a negative electrode. However, alternatively, the first electrode may be a negative electrode, and the second electrode may be a positive electrode. In this case, the exterior housing can serves as the positive electrode terminal.

### REFERENCE SIGNS LIST

10 Cylindrical battery, 11 Positive electrode, 12, 112 Negative electrode, 13 Separator, 14 Electrode assembly, 15 Battery case, 16 Exterior housing can, 17 Sealing assembly, 18 Insulating plate, 20 Positive electrode lead, 21, 121 Negative electrode lead part, 23 Terminal plate, 24 Insulating plate, 25, 125 Negative electrode current collector, 26, 126, Negative electrode mixture layer, 27 Sealing plate, 28 Gasket, 29, 129 Non-applied portion, 37 Negative electrode lead pair, 37a First negative electrode lead pair, 37b Second negative electrode lead pair, 37c Third negative electrode lead pair, 37d Fourth negative electrode lead pair, 40 First current collector plate, 41 Through hole, 41a First through hole, 41b Second through hole, 41c Third through hole, 41d Fourth through hole, 45 Second current collector plate, 51 Fitting part, 54 Through hole, 68 Bottom of exterior housing can

## Claims

1. A cylindrical battery, comprising:
a bottomed cylindrical exterior housing can;
an electrode assembly that is housed in the exterior housing can, and in which an elongated first electrode and an elongated second electrode having different polarities from each other are wound with a separator interposed between the first electrode and the second electrode;
a plurality of second electrode lead parts that extend from the second electrode toward a bottom of the exterior housing can;
a first current collector plate that is disposed on a side of the bottom of the electrode assembly and has two or more through holes at different positions from each other in a radial direction; and
a second current collector plate that is disposed between the first current collector plate and the bottom, wherein
each of the second electrode lead parts passes through any one of the through holes, and
a tip portion of each of the plurality of second electrode lead parts is held between the first current collector plate and the second current collector plate and is electrically connected to the second current collector plate.

2. The cylindrical battery according to claim 1, wherein
the plurality of second electrode lead parts are formed of a metal foil constituting a current collector of the second electrode.

3. The cylindrical battery according to claim 1 or 2, wherein
at least one of the plurality of second electrode lead parts is bonded to the first current collector plate.

4. The cylindrical battery according to any one of claims 1 to 3, wherein
the first current collector plate has a fitting part that is fitted into a hollow of the electrode assembly.
